# EUROPEAN PATENT APPLICATION

(11) **EP 1 785 033 A1**
(43) Date of publication of application: **16.05.2007**
(21) Application number: 05024632.1
(22) Date of filing: 11.11.2005
(51) Int. Cl.: A21B 3/07

(54) **Baked bread unloading device**

(71) Applicant: Talleres Colomina, S.L., 12489 Sot Del Ferrer (Castellon) (ES)
(72) Inventor: Colomina Llopis, Jose, 12489 Sot Del Ferrer (Castellon) (ES)
(74) Representative: Isern-Jara, Nuria

(57) **Abstract**

An automated baked bread unloading device that has a metallic structure (1) made up from a multitude of vertical and horizontal cross members that define a multitude of horizontally arranged shelves (2) and also arranged at different heights so as to place the baked bread (3) coming from a bread oven, each one of the shelves including an individual conveyor (4) that have two moving rollers located at each end of the shelf (2) that are moved by means of a motor reducer and a set of sliding ramps (5) arranged in a manner that is inclined downwards towards each one of the shelves (2) for the removal of the bread.

## Description

The object of the present invention is an automated baked bread-unloading device that includes significant innovations and advantages compared to the presently existing devices with the same purpose.

### BACKGROUND TO THE INVENTION

The proliferation of bread ovens on top of each other in the bread and cake baking industry, due to the saving of space and the possibility of multiple baking in each one of these ovens, has given rise to the development of another type of auxiliary machine for the automatic loading of said ovens. Column, scissor and multiple bread oven loaders-unloaders can be found in the market, which can be manual, semi-automatic and automatic each having different working systems depending on the manufacturer. The loading and unloading times for the ovens have been reduced with these types of machines and they have replaced the traditional wooden shovels, with the consequent saving in time and above all effort by the operators.

The bakery professional can choose between column or scissor loaders which load the different oven mouths one by one, up to multiple loaders, which with trays placed on top of each other with the number of trays equivalent to the number of shelves available in the oven, loading and unloading all of the shelves simultaneously, moving them perpendicularly to the front of the oven to load and unload the shelves from each mouth that the oven has.

Once the bread has been baked, it is removed from the oven with the loader, and the next task is to handle the baked bread at the temperature at which it exits the oven, said temperature being very high, and then to place it into boxes for its subsequent movement to its point of sale. In the case of multiple shelf loaders, the unloading task of same is in a manual manner and is complicated, especially the unloading of the upper shelves, compelling the arms of the operator to be raised with forced and unnatural postures.

### DESCRIPTION OF THE INVENTION

The present invention has been developed with the aim of providing an unloading device for baked bread that solves the above-mentioned disadvantages, in addition contributing other advantages that will be clear from the description made below.

The automated baked bread unloading device of the present invention is basically characterised on having a metallic structure made up from a multitude of vertical and horizontal cross members that define a multitude of horizontally arranged shelves and also arranged at different heights so as to place the baked bread coming from a conventional bread oven, including an individual transporter on each one of the shelves that has two driving rollers located at each end of the shelf that are driven by means of a reducer motor and a set of transfer ramps arranged in each one of the shelves in a manner that is inclined downwards to transport the loaves of bread to a storage area or accumulator.

Thanks to these characteristics, the last phase of the baking process for the subsequent sale can be automated in such a way that the baker does not have to handle the bread once it is removed from the oven to place it in the receiver boxes for its subsequent transfer to the different points of sale. With the device of this present invention a saving of labour and working time is achieved, the possible risks of burns that the baker could suffer are eliminated resulting from having to pick up the hot bread and approaching the loader-unloader that goes into the oven to remove the bread, as the oven works at temperatures of around 220°C., and in addition greater hygiene is achieved on completely eliminating the handling of a food product from the moment it is removed from the oven up to the moment it is sold when it passes into the hands of the customer.

In accordance with another aspect of the invention, the automatic device has a set of directional wheels fitted at the bottom of the structure that allows the device to be placed in accordance with the user's needs.

The length of the sliding ramps used is such that the greater the height of the shelf the shorter the length of the sliding ramp, in such a way that the upper sliding ramp is arranged on top of the sliding ramp immediately below.

By preference, the surface of the sliding ramps is covered with felt in order to prevent the loaves of bread from reaching an excessive speed that could break them on being deposited in the receiver box.

Another advantage is for the stated sliding ramps to have longitudinal flanges fitted laterally so as to prevent the bread from exiting laterally in such a way that it could fall onto the floor.

The baked bread-unloading device has a container for the collection of the bread that is divided into two sections by means of a separating device in the form of an inverted "V", in such a way that the bread can be distributed evenly, with the surfaces of said separation element covered with felt.

Other characteristics and advantages of the baked bread-unloading device of the present invention will be come clear from the present description of a preferred embodiment, but are not exclusive, they illustrate by way of example, but the drawings attached are not by way of limitation, in which:

### BRIEF DESCRIPTION OF THE DRAWINGS

Figure 1 shows a side elevation view of the baked bread-unloading device corresponding to the present invention.

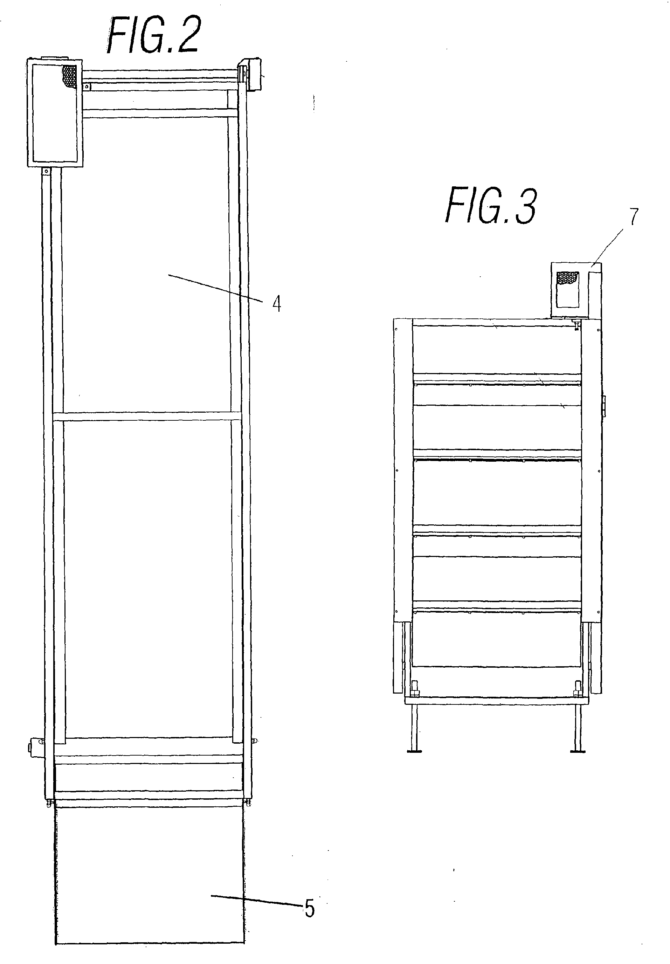

Figure 2 shows a plan elevation view of the device represented in the previous figure.
Figure 3 shows a front elevation view of the device represented in the previous figures 1 and 2; and

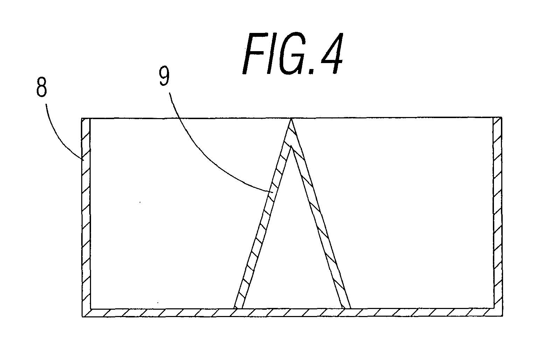

Figure 4 shows a transversal section view of the recipient for the collection of the bread.

### DESCRIPTION OF THE PREFERRED EMBODIMENT

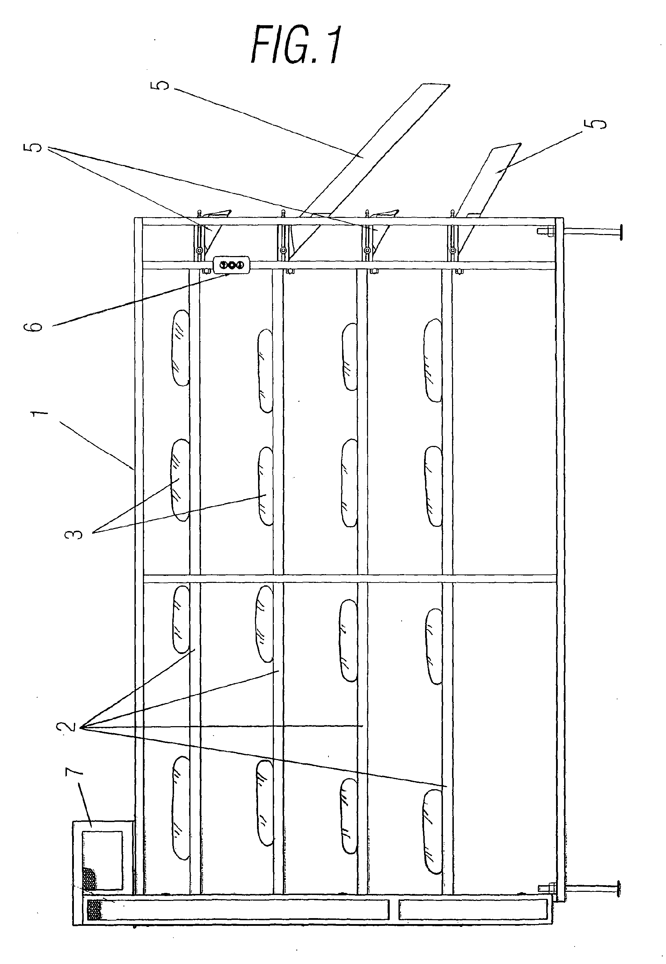

As and how shown in Figure 1, the baked bread unloading device of the present invention includes a metallic type structure (1) made up a multitude of vertical and horizontal cross members that define a multitude of horizontally arranged shelves (2) and also arranged at different heights having some wooden strips so as to place the portions or loaves of baked bread (3), including an individual transporter (4) on each one of the strips of the shelves (2) that has two moving rollers located at each end of the shelf (2) that are moved by means of a conventional motor reducer fitted on the inside of a housing (7), one of the rollers being a tractor to the other. In addition, there is a set of movement ramps (5), by preference made from stainless steel, arranged in a manner that is inclined downwards towards each one of the shelves (2). There is also the possibility of having a conveyor belt (4) on each shelf with a different turning speed by means of a gear assembly located in each one for the transfer of the movement in either direction, i.e. endless, this being possible to control by means of an electrical control box with buttons (6). The activation system basically is made up of pinions worked by the reducer motor that transfers the movement to each one of the conveyor belts (4) of the respective shelves (2) by means of a belt or rack arranged vertically to the structure (1), said activation elements being protected on the inside of the carcass.

The length of the sliding ramps (5) is such that the greater the height of the shelf (2), the shorter the length of the sliding ramp (5), the surface of the sliding ramps (5) being covered with felt to reduce the speed of the bread and to thus prevent the breaking of the bread. Each sliding ramp (5) is located on an extension of the shelf that has a longitudinal groove that allows the horizontal position of the sliding ramp (5) to be adjusted. Likewise, the shelves (2) can be of different lengths, in such a way that the low shelves have a greater length than the higher shelves (2), in this way the bread is moved from the upper sliding ramps (5) to the lower ones without any deterioration.

The sliding ramps (5) have longitudinal flanges (6) arranged laterally that prevent the loaves of bread (3) from coming off the sides of the sliding ramps (5).

The unloading device has a stainless steel container (8) for the collection of the bread that is divided into two compartments by means of a separation element (9) in the form of an inverted "V" (see Diagram 4) with the surfaces of said separation element (9) being covered with felt.

The unloading device of the invention can have a multitude of directional wheels (not shown) arranged on the lower part of the structure (1) to make the movement of the entire structure (1) easier.

The details, shapes, dimensions and other ancillary elements, likewise the materials used in the manufacture of the baked bread unloading device can be suitably substituted by others that are technically equivalent and do not deviate from the fundamentals of the invention or from the scope defined by the claims that are included below.

## Claims

1. Automatic baked bread unloading device, **characterised in that** it includes a metallic type structure (1) made up a multitude of vertical and horizontal cross members that define a multitude of horizontally arranged shelves (2) arranged at different heights so as to place the baked bread (3) coming from the oven, each of said shelves including a conveyor belt (4) that has two driving rollers located at each end of the shelf (2) that are driven by means of a conventional motor reducer, each shelf (2) having as well a set of transfer ramps (5), arranged in a manner that is inclined downwards for the removal of the bread.

2. Baked bread unloading device according to claim 1 **characterised in that** it has a multitude of directional wheels on the bottom of the structure (1).

3. Baked bread unloading device according to claim 1 **characterised in that** the length of the sliding ramps (5) is such that the greater the height of the shelf the shorter is the sliding ramp (5).

4. Baked bread unloading device according to claim 1 **characterised in that** the surface of the sliding ramps (5) are covered with felt.

5. Baked bread unloading device according to claim 1 **characterised in that** the sliding ramps (5) have longitudinal vertical flanges on the side.

6. Baked bread unloading device according to claim 1 **characterised in that** it has a container (8) for the collection of the bread arranged on the side corresponding to the sliding ramps (5).

7. Baked bread unloading device according to claim 6 **characterised in that** the inside of the container (8) is divided into two sections by means of a separation element (9) in the shape of an inverted "V" with the surfaces of said separation element covered with felt.
